# EUROPÄISCHE PATENTANMELDUNG

(11) **EP 0 838 598 A2**
(43) Veröffentlichungstag der Anmeldung: **29.04.1998**
(21) Anmeldenummer: 97117567.4
(22) Anmeldetag: 10.10.1997
(51) Int. Cl.: F16B 5/06, B60R 1/06

(54) **Rastverbindung**

(30) Priorität: 23.10.1996 DE 29618497 U; 30.07.1997 DE 19732690
(71) Anmelder: HAGUS C. LUCHTENBERG GmbH & Co. KG, D-42719 Solingen (DE)
(72) Erfinder: Luchtenberg, Curt, 42719 Solingen (DE)
(74) Vertreter: Selting, Günther, Dipl.-Ing.

(57) **Zusammenfassung**

Bei einer Rastverbindung zum Verbinden von zwei Bauteilen weist ein erstes Bauteil (1,2), das aus einem Basisteil (1) und einem Bewegungsteil (2) besteht, mehrere Rasthakenpaare (3,4) auf. Ein zweites Bauteil (2) weist entsprechend zu den Rasthakenpaaren (3,4) angeordnete Ansätze auf, die jeweils in ein Rasthakenpaar (3,4) einrasten. Jeweils ein Rasthaken (3) jedes Rasthakenpaars (3,4) ist starr mit dem Basisteil (1) verbunden. Die anderen Rasthaken (4) sind mit dem Bewegungsteil (2) fest verbunden, das wiederum über radial verlaufende Stege (5) elastisch verdrehbar mit dem Basisteil (1) verbunden ist. Somit lassen sich die Rasthaken (4) nur gemeinsam in Richtung des Pfeils (c) drehen.

## Beschreibung

Die Erfindung betrifft eine Rastverbindung nach dem Oberbegriff des Patentanspruchs 1.

Zum Verbinden von Bauteilen mittels einer Rastverbindung ist es bekannt, an einem Bauteil zwei Rasthaken vorzusehen, in welche ein entsprechend geformter Ansatz des anderen Bauteils einrastet. Beim Zusammenfügen der beiden Bauteile werden die aus flexiblem Material bestehenden Rasthaken von dem an dem anderen Bauteil vorhandenen Ansatz auseinandergedrückt und schnappen zum Verbinden der beiden Bauteile in ihre Ausgangslage zurück. Hierzu weisen die Rasthaken beispielsweise Hinterschneidungen auf, in welche die an dem anderen Bauteil vorgesehenen Ansätze einrasten.

Häufig weisen Bauteile mehrere solche Rastverbindungen auf, um eine definierte Lage der beiden Bauteile zueinander zu gewährleisten. Bei Verwendung vorstehend beschriebener Rasthakenpaare kann allerdings das Problem auftreten, daß nicht sämtliche Ansätze des einen Bauteils in sämtliche Rasthakenpaare des anderen Bauteils einrasten. Befindet sich die Rastverbindung insbesondere an einer nicht sichtbaren und/oder schwer zugänglichen Stelle, so kann es beim Montieren unbemerkt bleiben, daß nicht sämtliche Ansätze eingerastet sind. Dies führt zum Verkanten der Bauteile gegeneinander, so daß deren Funktionsweise nicht mehr gewährleistet ist. Da die Funktionsweise entsprechend zusammengefügter Bauteile häufig nicht direkt nach dem Montieren getestet wird bzw. getestet werden kann, wird das Verkanten der Bauteile häufig erst erheblich später festgestellt. Hieraus ergibt sich zumeist ein erheblicher Demontieraufwand, sofern die zusammengefügten Bauteile überhaupt demontierbar sind.

Ein entsprechendes Verkanten tritt auch häufig dann auf, wenn die Bauteile biegbar sind und somit ggf. nur ein Teil sämtlicher Rastverbindungen einschnappt.

Aufgabe der Erfindung ist es daher, bei einer Mehrfach-Rastverbindung sicherzustellen, daß alle Rastteile sicher einrasten.

Gemäß der Erfindung ist dies durch die Merkmale des Patentanspruchs 1 gelöst. Vorteilhafte Weiterbildungen sind Gegenstand der Unteransprüche.

Bei der erfindungsgemäßen Rastverbindung besteht ein erstes von zwei zu verbindenden Bauteilen aus einem Basisteil und einem elastisch mit diesem verbundenen Bewegungsteil und weist ferner mehrere Rasthakenpaare auf. Das zweite Bauteil weist entsprechend zu den Rasthakenpaaren angeordnete Ansätze auf, die beim Verbinden der beiden Bauteile jeweils in das entsprechende Rasthakenpaar einrasten. Die Rasthaken selbst sind sehr steif ausgebildet und können somit nicht oder nur geringfügig gebogen werden. Erfindungsgemäß ist jeweils ein Rasthaken der Rasthakenpaare starr mit dem Basisteil verbunden. Die jeweils anderen Rasthaken der Rasthakenpaare sind starr mit dem Bewegungsteil verbunden, das elastisch mit dem Basisteil verbunden ist. Die Verbindung zwischen Basisteil und Bewegungsteil ist vorzugsweise mittels mehrerer, flexibler Stege realisiert.

Somit drücken beim Montieren des zweiten Bauteils auf dem ersten Bauteil die an dem zweiten Bauteil vorgesehenen Ansätze gegen die Rasthaken und schieben diese auseinander, indem die starr mit dem Bewegungsteil verbundenen Rasthaken gegenüber den starr mit dem Basisteil verbundenen Rasthaken gemeinsam verdreht bzw. verschoben werden, da das Bewegungsteil elastisch mit dem Basisteil verbunden ist. Erst wenn sämtliche Ansätze in eine Endposition gebracht sind, bewegen sich die verdrehten bzw. verschobenen Rasthaken aufgrund der elastischen Verbindung des Bewegungsteils mit dem Basisteil in deren Ausgangslage zurück, so daß die beiden Bauteile miteinander verbunden sind.

Im folgenden werden der Einfachheit halber die fest mit dem ersten Bauteil verbundenen Rasthaken als feste Rasthaken und die verdrehbar bzw. verschiebbar mit dem ersten Bauteil verbundenen Rasthaken als bewegliche Rasthaken bezeichnet.

Da die beweglichen Rasthaken starr miteinander verbunden sind, werden sämtliche Rasthakenpaare gemeinsam geöffnet. Hierfür ist es bereits ausreichend, wenn nur ein einziger Ansatz des zweiten Bauteils auf ein Rasthakenpaar drückt. Aufgrund der starren Verbindung der beweglichen Rasthaken können diese nur gemeinsam aus ihrer Ausgangsstellung verschoben bzw. verdreht werden und sich ebenfalls nur gemeinsam in diese zurückbewegen. Somit ist sichergestellt, daß nicht nur ein Teil der Ansätze, sondern stets sämtliche Ansätze des zweiten Bauteils in die Rasthakenpaare des ersten Bauteils eingerastet sind. Ein Verkanten der beiden Bauteile ist daher ausgeschlossen. Selbst wenn die Bauteile biegbar sind, ist ein Verkanten der Bauteile ausgeschlossen, da sich die Rasthakenpaare erst schließen, wenn sämtliche Ansätze in definierten Lagen in den Rasthakenpaaren angeordnet sind.

Bei einer bevorzugten Ausführungsform sind die beweglichen Rasthaken vorzugsweise über radial verlaufende Ansätze an einer im wesentlichen kreisförmigen Platte, die als Bewegungsteil dient, angeordnet, wobei die beweglichen Rasthaken senkrecht zur Platte angeordnet sind. Somit sind die beweglichen Rasthaken auf einfache Weise über die radial verlaufenden Ansätze und die kreisförmige Platte starr miteinander verbunden. Ferner sind an der kreisförmigen Platte radial verlaufende Stege angeordnet, welche die Platte, und damit die beweglichen Rasthaken, elastisch mit dem Basisteil verbinden. Beim Verdrehen der Platte werden die Stege somit auf Biegung beansprucht. Da mehrere Stege das Bewegungsteil in Form der Platte in radialer Richtung mit dem Basisteil verbinden, ist sichergestellt, daß sich die Platte nur in einer Ebene verdrehen kann.

Bei dieser Ausführungsform der Erfindung sind die Ansätze an dem zweiten Bauteil entlang einer Kreislinie angeordnet. Dementsprechend sind auch die Rasthakenpaare entlang einer entsprechenden Kreislinie an dem ersten Bauteil angeordnet. Handelt es sich bei dem zweiten Bauteil beispielsweise um ein rotationssymetrisches Bauteil oder um ein Bauteil mit einem rotationssymmetrischen Fortsatz, so sind die Ansätze vorzugsweise entlang der Umfangslinie nach außen vorstehend angeordnet.

Bei der Montage beider Bauteile drückt einer oder mehrere Ansätze des zweiten Bauteils die beweglichen Rasthaken von den festen Rasthaken weg. Hierbei wird die im wesentlichen kreisförmige Platte um einen bestimmten Winkel gedreht.

Die Rasthaken sind vorzugsweise so ausgebildet, daß diese Vorsprünge aufweisen, die jeweils in Richtung des anderen, zu einem Rasthakenpaar gehörenden Rasthaken weisen. Ferner verjüngen sich die Rasthaken von den Vorsprüngen aus in Richtung des dem Bauteil abgewandten Endes. Ferner bilden die Vorsprünge der Rasthaken in entgegengesetzter Richtung einen rechten Winkel mit dem Rasthaken, so daß der Rasthaken einen Absatz aufweist. Somit ist sichergestellt, daß beim Montieren der beiden Bauteile die Ansätze beim Zusammenfügen der Bauteile jeweils zwei Rasthaken eines Rasthakenpaars auseinanderdrücken und die beweglichen Rasthaken nach Überwinden des Vorsprungs aufgrund der elastisch ausgebildeten Stege wieder automatisch in ihre Ausgangslage zurückgedreht werden und somit die Ansätze des zweiten Bauteils in die Rasthakenpaare des ersten Bauteils eingerastet sind.

Bei einer weiteren bevorzugten Ausführungsform ist beispielsweise an der im wesentlichen kreisrunden Platte, mit welcher die beweglichen Rasthaken starr verbunden sind, als Montagehilfe ein Zeiger so angeordnet, daß dieser auch wenn beim Montieren die Rastverbindungen nicht einsehbar sind, sichtbar ist und somit anzeigt, ob die beweglichen Rasthaken verdreht bzw. verschoben sind oder sich in der Ausgangslage befinden.

Bei einer entsprechend stabilen Ausführung des Zeigers kann dieser ferner als Griffteil zum Lösen der Rastverbindung verwendet werden, indem der Zeiger verschoben wird. Aufgrund der Verschiebung des Zeigers, der mit dem Bewegungsteil fest verbunden ist, werden auch die beweglichen Rasthaken verdreht bzw. verschoben, so daß sich das zweite Bauteil vom ersten Bauteil einfach trennen läßt.

Aufgrund der erfindungsgemäßen Gestaltung des ersten Bauteils ist es möglich, dieses einteilig, beispielsweise aus thermoplastischem Kunststoff, herzustellen.

Eine bevorzugte Verwendung der erfindungsgemäßen Rastverbindung besteht darin, einen Spiegelglasträger, auf welchem beispielsweise das Spiegelglas eines Seitenspiegels eines Kraftfahrzeugs befestigt ist, mittels der erfindungsgemäßen Rastverbindung mit einem Verstellmotor zu verbinden.

Im folgenden wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht einer bevorzugten Ausführungsform des ersten Bauteils der Erfindung in Form eines Spiegelglasträgers,
- Fig. 2: eine Draufsicht auf den in Fig. 1 dargestellten Spiegelglasträger mit einer erfindungsgemäßen Weiterbildung,
- Fig. 3: eine vergrößerte Darstellung des in Fig. 1 mit Z bezeichneten Bereichs des Spiegelglasträgers und
- Fig. 4: eine Draufsicht auf eine bevorzugte Ausführungsform eines zweiten Bauteils zur Aufnahme eines Verstellmotors.

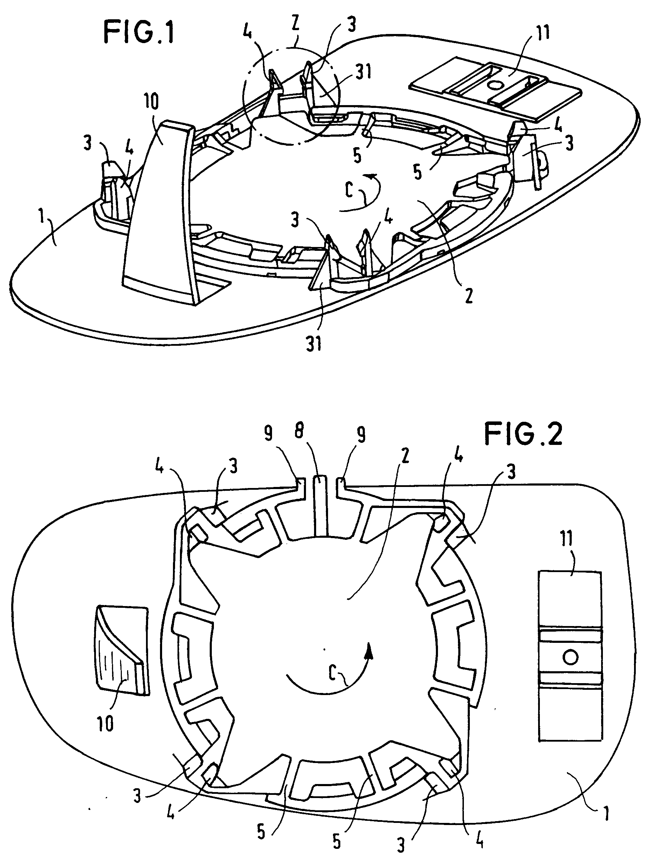

Eine in Fig. 1 und 2 dargestellte bevorzugte Ausführungsform eines ersten Bauteils der Erfindung in Form eines Spiegelglasträger besteht aus einem Basisteil 1 und einem Bewegungsteil 2. Entlang einer Kreislinie sind mehrere Rasthakenpaare 3,4 vorgesehen. Die Rasthaken 3 sind fest mit dem Basisteil 1, der Rückseite des Spiegelglasträgers verbunden, auf dessen gegenüberliegender Seite ein Spiegelglas beispielsweise aufgeklebt ist. Die Rasthaken 3 sind ferner äußerst steif ausgebildet. Hierzu ist zwischen den Rasthaken 3 und dem Spiegelglasträger 1 eine Versteifungsrippe 31 vorgesehen.

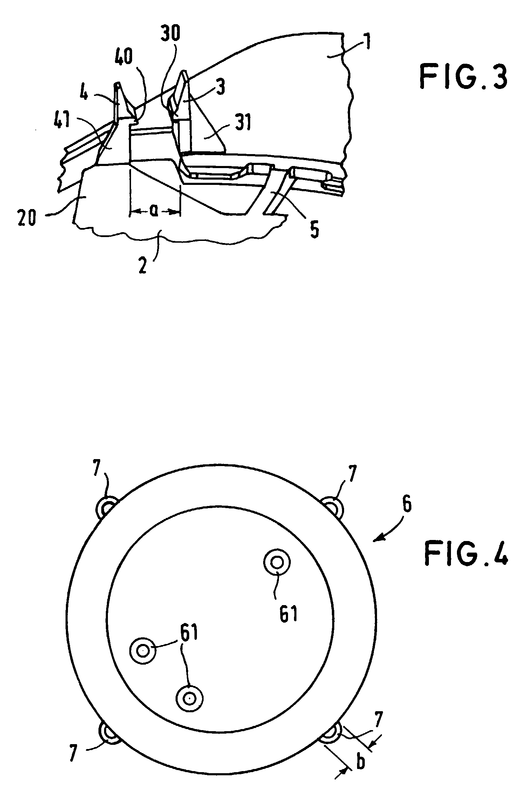

In einem festen Abstand a (Fig. 3) zu den festen Rasthaken 3 sind bewegliche Rasthaken 4 angeordnet. Wie insbesondere aus Fig. 2 ersichtlich ist, sind die Rasthaken 4 nicht direkt mit dem Spiegelglasträger 1 verbunden. Vielmehr sind die Rasthaken 4 über Ansätze 20 mit dem Bewegungsteil 2, einer im wesentlichen kreisförmigen Platte fest und steif verbunden. Die kreisförmige Platte 2 wiederum ist über radial verlaufende Stege 5 mit dem Spiegelglasträger 1 elastisch verbunden. Die Stege 5 sind hierbei so ausgebildet, daß sie aufgrund ihrer Breite und Dicke ein elastisches Verdrehen der Platte 2 in Richtung des Pfeils c ermöglichen. Bei einem Verdrehen der Platte 2 in Richtung des Pfeils c vergrößert sich der Abstand zwischen den festen Rasthaken 3 und den beweglichen Rasthaken 4.

Ferner weist der Spiegelglasträger 1 für die Funktion der Rastverbindung unerhebliche Führungs- 10 und Befestigungselemente 11 auf.

Fig. 2 zeigt ferner einen Zeiger 8, der fest mit der Platte 2 verbunden ist. Der Zeiger 8 steht über den Randbereich des Spiegelglasträgers vor. Beim Zusammenfügen des Aufnahmeteils 6 (Fig. 4) mit dem Spiegelglasträger 1 sind die Rasthaken 3,4 beispielsweise von einem an dem Aufnahmeteil 6 befestigten Verstellmotor verdeckt, so daß ein Monteur nicht sehen kann, ob das Aufnahmeteil 6 richtig in die Rasthakenpaare 3,4 des Spiegelglasträgers 1 und der Platte 2 einrastet. Aufgrund des Zeigers 8, der vom Monteur gesehen werden kann, ist es möglich, ein Drehen der Platte 2 und somit ein Öffnen der Rasthakenpaare 3,4 zu beobachten. Somit ist sichergestellt, daß, sobald sich der Zeiger aus seiner mittigen Lage in Richtung ebenfalls über den Randbereich des Spiegelglasträgers 1 vorstehender Ansätze 9 und anschließend wieder zurück in seine Ausgangslage bewegt, sämtliche Laschen 7 (Fig. 4) in die Rasthakenpaare 3,4 eingerastet sind.

Bei einer entsprechend stabilen Ausführung des Zeigers 8 kann dieser auch als Griffteil zum Öffnen der Rastverbindung verwendet werden, indem der Zeiger 8 mittels eines entsprechenden Werkzeugs nach rechts bewegt wird und somit ein Drehen der Platte 2 verursacht. Somit läßt sich das Aufnahmeteil 6 (Fig. 4), beispielsweise für Reparaturarbeiten, leicht von dem Spiegelglasträger 1 trennen.

Aus der in Fig. 3 dargestellten Vergrößerung des in Fig. 1 mit Z bezeichneten Bereichs ist die Form der Rasthaken 3 und 4 ersichtlich. Beide Rasthaken 3,4 weisen Vorsprünge 30 bzw. 40 auf. Um ein sicheres Aufnehmen eines Ansatzes 7 (Fig. 4) in dem Rasthakenpaar 3,4 zu gewährleisten, sind beide Rasthaken 3 und 4 von den Vorsprüngen 30 bzw. 40 aus in Richtung des von dem Spiegelglasträger 1 abgewandten Ende verjüngt. In Richtung des Spiegelglasträgers 1 weisen die Vorsprünge 30,40 einen rechtwinkligen Ansatz auf, so daß ein in dem Rasthakenpaar 3,4 eingerasteter Ansatz 7 (Fig. 4) nicht mehr nach oben aus dem Rasthakenpaar 3,4 herausziehbar ist.

Entsprechend der Versteifung 31 des Rasthakens 3 ist auch der Rasthaken 4 in Richtung des Ansatzes 20 der im wesentlichen kreisförmigen Platte 2 durch eine entsprechende Versteifung 41 möglichst starr mit dem Ansatz 20 verbunden.

Ferner ist aus Fig. 3 ersichtlich, daß die Stege 5 verglichen mit dem Spiegelglasträger 1 dünner sind, um ein einfaches Verdrehen der Platte 2 beim Montieren einer in Fig. 4 dargestellten Aufnahme mit dem Spiegelglasträger zu gewährleisten.

Fig. 4 zeigt beispielhaft eine Draufsicht auf eine bevorzugte Ausführungsform eines Bauteils zur Aufnahme eines nicht dargestellten Verstellmotors. Das zweite Bauteil in Form des Aufnahmeteils 6 ist rotationssymmetrisch und weist an seinem äußeren Umfang Ansätze 7 auf. Der Außendurchmesser des Aufnahmeteils 6 ist etwas kleiner als der Durchmesser des Kreises, auf welchem sich die Rasthaken 3 und 4 (Fign. 1 und 2) befinden. Da die Abstände der Ansätze 7 den Abständen der Rasthakenpaare 3,4 entsprechen, rasten die Ansätze 7 beim Zusammenfügen des ersten Bauteils 1,2 mit dem zweiten Bauteil 6 in die Rasthaken 3,4 ein. Hierzu muß das Aufnahmeteil 6 in Fig. 2 lediglich von oben auf den mit der Platte 2 verbundenen Spiegelglasträger 1 aufgesetzt und nach unten gedrückt werden. Hierbei werden die beweglichen Rasthaken 4 von den Ansätzen 7 in Richtung des Pfeils c bewegt, so daß das Aufnahmeteil 6 auf den Spiegelträger 1 zu bewegt werden kann. Sobald sämtliche Ansätze 7 die Endposition erreicht haben, d.h. daß sich die Oberseite der Ansätze 7 unterhalb der Vorsprünge 30,40 der Rasthaken 3,4 befindet, bewegen sich die Rasthaken 4 aufgrund der elastischen Stege 5 wieder in ihre Ausgangslage zurück. Somit ist das Aufnahmeteil 6 fest mit dem Spiegelglasträger 1 und der Platte 2 verbunden.

Ferner weist das Aufnahmeteil 6 beispielsweise zur Aufnahme des Verstellmotors Befestigungslöcher 61 auf.

## Patentansprüche

1. Rastverbindung zum Verbinden von zwei Bauteilen, wobei ein erstes Bauteil (1,2) mehrere Rasthakenpaare (3,4) und ein zweites Bauteil (6) entsprechend zu den Rasthakenpaaren (3,4) angeordnete Ansätze (7) aufweist, die jeweils in ein Rasthakenpaar einrasten,
**dadurch gekennzeichnet,**
daß das erste Bauteil aus einem Basisteil (1) und einem hiermit elastisch verbundenen Bewegungsteil (2) besteht,
daß die Rasthaken (3,4) steif sind, und
daß jeweils ein Rasthaken (3) jedes Rasthakenpaars (3,4) starr mit dem Basisteil (1) und der anderen Rasthaken (4) starr mit dem Bewegungsteil (2) verbunden ist.

2. Rastverbindung nach Anspruch 1, dadurch gekennzeichnet, daß zur elastischen Verbindung des Basisteils (1) mit dem Bewegungsteil (2) mehrere flexible Stege (5) vorgesehen sind.

3. Rastverbindung nach Anspruch 1 oder 2, dadurch gekennzeichnet, daß die Rasthaken (4) an radialen Ansätzen (20) des im wesentlichen kreisscheibenförmigen Bewegungsteils (2) senkrecht zu diesem angeordnet sind, das über mehrere radial verlaufende Stege (5) mit dem Basisteil (1) verbunden ist.

4. Rastverbindung nach Anspruch 3, dadurch gekennzeichnet, daß die an dem zweiten Bauteil (6) vorgesehenen Ansätze (7) und die an dem ersten Bauteil (1,2) vorgesehenen Rasthakenpaare (3,4) entlang einer Kreislinie angeordnet sind.

5. Rastverbindung nach einem der Ansprüche 1-4, dadurch gekennzeichnet, daß an dem Bewegungsteil (2) ein während der Montage sichtbarer Zeiger (8) vorgesehen ist.

6. Rastverbindung nach Anspruch 5, dadurch gekennzeichnet, daß der Zeiger (8) als Griffteil zum Lösen der Rastverbindung ausgebildet ist.

7. Rastverbindrnng nach einem der Ansprüche 1-6, dadurch gekennzeichnet, daß das gesamte erste Bauteil (1,2) einteilig ist.

8. Rastverbindung nach einem der Ansprüche 1-7, dadurch gekennzeichnet, daß das erste oder das zweite Bauteil der Spiegelglasträger eines Kraftfahrzeugspiegels ist und das andere Bauteil mit einem Verstellmotor verbunden ist.
